(19) Europäisches Patentamt
European Patent Office
Office européen des brevets

(11) EP 2 844 708 B1

(12) **EUROPEAN PATENT SPECIFICATION**

(45) Date of publication and mention of the grant of the patent:
**24.08.2016 Bulletin 2016/34**

(21) Application number: **13715066.0**

(22) Date of filing: **15.03.2013**

(51) Int Cl.:
***C09D 7/00*** *(2006.01)*

(86) International application number:
**PCT/US2013/032548**

(87) International publication number:
**WO 2013/165618 (07.11.2013 Gazette 2013/45)**

# (54) LOW VOC GLYCOL ETHER COALESCENTS FOR WATER BASED COATINGS

VOC-ARME GLYKOLETHERGERINNUNGSMITTEL FÜR BESCHICHTUNGEN AUF WASSERBASIS

AGENTS DE COALESCENCE À BASE D'ÉTHER DE GLYCOL ET À FAIBLE TENEUR EN COMPOSÉS ORGANIQUES VOLATILS POUR REVÊTEMENTS À BASE AQUEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.04.2012 US 201261640205 P**

(43) Date of publication of application:
**11.03.2015 Bulletin 2015/11**

(73) Proprietor: **Dow Global Technologies LLC**
**Midland, MI 48641-1967 (US)**

(72) Inventors:
- **EMELIE, Brigitte**
  **F-67840 Kilstett (FR)**
- **LEFFERS, Wilhelm, H.**
  **21682 Stade (DE)**

(74) Representative: **Beck Greener**
**Fulwood House**
**12 Fulwood Place**
**London WC1V 6HR (GB)**

(56) References cited:
**US-A1- 2004 109 853** **US-A1- 2010 233 146**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 844 708 B1

## Description

CROSS-REFERENCE TO RELATED APPLICATIONS

This application claims priority from provisional application serial number 61/640,205, filed April 30, 2012, which is incorporated herein by reference in its entirety.

BACKGROUND OF THE INVENTION

This invention relates to low VOC glycol ether compositions suitable for use as coalescents for aqueous polymeric dispersions.

Coalescents are added to compositions, such as aqueous polymeric dispersions and waterborne paints or coatings including aqueous dispersions of polymers, in order to facilitate the formation of a continuous polymeric, or binder, film as water evaporates from the composition. Without the addition of coalescents, polymer dispersions may not act as effective binders for pigments in the paint and adhesion to a substrate may be compromised. For many years, these coalescing aids have been relatively volatile solvents such as 2,2,4-trimethyl-1,3- pentanediol monoisobutyrate, dipropylene glycol n-butyl ether, and butyl carbitol acetate.

Volatile organic compound (VOC) emissions may contribute to the creation of ozone, a constituent of smog. In the US, VOC regulations established by the US Environmental Protection Agency (EPA) and enforced at the state level dictate the maximum concentration of volatile solvents in paints, clean up solvents, and other products. In Europe, VOC limits are defined by the 2004/42/EC Solvents Directive for Decorative Paints, and wall paints and interior wall paints in particular are regulated by the Paint Directive 2004/42/EC which defines volatile organic compound as any organic compound having an initial boiling point of less than or equal to 250°C measured at a standard pressure of 101.3 kPa and defines Maximum VOC content in g/liter for Paints and Varnishes for indoor and outdoor applications. With the passage of time, VOC regulations have become more and more stringent and have affected the choice of available coalescents.

Regulators have lately introduced new regulations to control the emissions of paints and construction products placed on the market for indoor applications. Specifically, France recently has published Law decree 321/2011 as part of the "Grenelle de l’environnement" initiative and foresees that after January 2012 any new paint placed on the market for indoor floor and wall coverings, paints and lacquers must be labeled with emission classes based on their emissions after 28 days, as tested with ISO 16000 methods, e.g. ISO 16000-3, -6 and -9.

Many currently commercial low-VOC coalescing agents that meet the requirements of the European standard 2004/42/CE generate significant amounts of VOCs according to the new French emission standard, and do not meet the requirements for the end uses covered by that standard.

It would be desirable to have a coalescing agent containing less than 15% VOC that would be useful for the preparation of indoor paints as defined in French law decree 2011/321, where VOC is defined as each and every volatile component having an initial boiling point between 50°C and 286°C, with the sum of VOCs being the sum of compounds eluting between n-hexane and n-hexadecane according to ISO-16000-6.

SUMMARY OF THE INVENTION

The invention includes such a coalescent composition comprising at least one glycol ether of the formula $R1(O-CH_2-CH(CH_3))_n-OH$, wherein R1 is an alkyl group of at least 3 carbon atoms, and n has an average value of from 4 to 6, wherein n = 4 for at least 60% by weight of the glycol ethers, and no more than 15% by weight of the glycol ethers have an n value of 3 or less.

The invention includes compositions comprising an aqueous polymeric dispersion and the low VOC coalescents of the invention. The invention provides certain glycol ether and low VOC compositions including glycol ethers that are particularly suitable for use in compositions that include aqueous polymeric dispersions such as, for example, decorative and protective coatings for various substrates.

Surprisingly, the composition of the invention can be used to prepare indoor coatings that comply with the stricter VOC requirements of French law decree 2011/321, dated April 19, 2011.

DETAILED DESCRIPTION OF THE INVENTION

As used herein, "a," "an," "the," "at least one," and "one or more" are used interchangeably. The terms "comprises," "includes," and variations thereof do not have a limiting meaning where these terms appear in the description and claims. Thus, for example, an aqueous composition that includes particles of "a" hydrophobic polymer can be interpreted to mean that the composition includes particles of "one or more" hydrophobic polymers.

Also herein, the recitations of numerical ranges by endpoints include all numbers subsumed in that range (e.g., 1 to 5 includes 1, 1.5, 2, 2.75, 3, 3.80, 4, 5, etc.). For the purposes of the invention, it is to be understood, consistent with what one of ordinary skill in the art would understand, that a numerical range is intended to include and support all possible subranges that are included in that range. For example, the range from 1 to 100 is intended to convey from 1.01 to 100, from 1 to 99.99, from 1.01 to 99.99, from 40 to 60, from 1 to 55, etc. Also herein, the recitations of numerical ranges and/or numerical values, including such recitations in the claims, can be read to include the term "about." In such instances the term "about" refers to numerical ranges and/or numerical values that are substantially the same as those recited herein.

This invention particularly relates to a glycol ether coalescent composition comprising at least one glycol ether of the formula $R1(O\text{-}CH_2\text{-}CH(CH_3))_n\text{-}OH$, which can also be depicted as shown in the following formula:

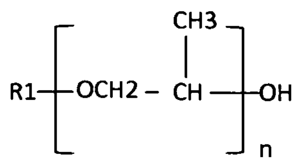

wherein R1 is an alkyl group of at least 3 carbon atoms, and n has an average value of from 4 to 6, wherein n = 4 for at least 60%, preferably at least 70%, by weight of the glycol ethers, and no more than 15% by weight of the glycol ethers have an n value of 3 or less. In one embodiment of the invention, R1 is an alkyl group of from 3 to 7 carbon atoms. Examples of glycol ethers that may be present in the coalescent composition include tripropylene glycol n-butyl ether, tetrapropylene glycol n-butyl ether, pentapropylene glycol n-butyl ether and higher molecular weight glycol ethers. In one embodiment of the invention, R1 of the glycol ether composition primarily consists of alkyl moieties of from 4 to 6 carbon atoms. In one embodiment of the invention, R1 is butyl, and in another embodiment R1 is n-butyl. In one embodiment of the invention, n = 4 for at least 60%, preferably at least 70%, by weight of the glycol ethers of the composition. Tetrapropylene glycol n-butyl ether is at least 70% by weight of the glycol ethers in the composition in one embodiment of the invention. Advantageously, no more than 15% by weight of the glycol ethers have an n value of 3 or less, preferably no more than 10%.

The glycol ether composition of the invention comprises certain glycol ether coalescents advantageously having a boiling point of greater than 280°C at 760 mm Hg (101,324 KPa), preferably greater than 286°C, more preferably greater than 290°C. The invention includes compositions comprising an aqueous polymeric dispersion and the low VOC coalescents of the invention, and a method for forming a coating. The glycol ethers of the invention are typically liquids in the 0-25°C temperature range to facilitate their use as coalescents.

The glycol ethers of the present invention can be obtained by reacting alcohols with propylene oxide. Preferred glycol ethers, such as polypropylene glycol monobutyl ether, are prepared by reacting n-butanol with propylene oxide. Any of several synthetic methods known to those skilled in the art can be used to prepare the aforementioned glycol ethers. One method involves reacting stoichiometric amount of propylene oxide and n-butanol. Glycol ethers obtained by any of the aforementioned methods can be purified according to methods known to this skilled in the art, such as by distillation, to produce desired fractions. In one embodiment of the invention, the distillation is conducted under vacuum, e.g., by flash distillation.

The reaction can be carried out in a batch or continuous manner. An alkaline catalyst can be used to enhance the reaction. Excess butanol, and mono-, di- and or tripropylene glycol monobutyl ethers may substantially be removed and separated by known process technologies such as distillation. It is possible to remove the catalyst from the reaction mixture so that the reaction mixture is substantially free of catalyst, and in one embodiment of the invention, the catalyst is removed from the reaction mixture. Advantageously, the residence time in the distillation process is minimized in order to avoid product degradation.

In one aspect of the present invention there is provided an aqueous coating composition comprising an aqueous polymeric dispersion and from 0.1% to 40% by weight, based on the weight of aqueous polymeric dispersion solids, of said glycol ether coalescent described hereinabove.

By "coalescent composition" is meant a composition that facilitates the film formation of an aqueous polymeric dispersion, particularly an aqueous coating composition that includes a dispersion of polymer in an aqueous medium such as, for example, a polymer prepared by emulsion polymerization techniques. An indication of facilitation of film formation is that the minimum film forming temperature ("MFFT") of the composition including the aqueous polymeric dispersion is measurably lowered by the addition of the coalescent.

The aqueous coating composition of the present invention includes an aqueous polymeric dispersion and from 0.1% to 40% by weight, based on the weight of aqueous polymeric dispersion solids, of the coalescent of the present

invention. In one embodiment when the MFFT of the aqueous polymeric dispersion is from -5°C to 100°C, from 0.1% to 30% coalescent, by weight based on the weight of aqueous polymeric dispersion solids, may be used. Alternatively, when the MFFT of the aqueous polymeric dispersion is from -20°C to 30°C, from 0.1% to 5% coalescent, by weight based on the weight of aqueous polymeric dispersion solids, may be used. MFFTs of the aqueous polymeric dispersions herein are those measured using ASTM D 2354 and a 5 mil MFFT bar. MFFT values are indicative of how efficient a coalescent is for a given aqueous polymeric dispersion; it is desirable to achieve the lowest possible MFFT with the smallest amount of coalescent. The aqueous polymeric dispersion may be a dispersion comprising a polymer, oligomer, prepolymer, or a combination thereof in an aqueous medium. In some embodiments the aqueous polymeric dispersion may be reactive before, during, or subsequent to film formation. By "aqueous medium" is meant herein a medium including at least 50%, by weight based on the weight of the medium, water. Typical aqueous polymeric dispersions are aqueous dispersions of epoxies, urethanes, acrylic polyols, polyesters, and hybrids of these and other chemistries; and emulsion polymers. In one embodiment of the invention, the coalescent composition of the invention accounts for no more than 15 wt %, preferably no more than 10 wt%, of the VOC of the overall amount of coalescent used.

In some embodiments the aqueous polymeric dispersions are part of reactive systems. For example, in a 2k system, such as an epoxy dispersion system, the coalescent can be added to either the component including the epoxy dispersion or, alternatively to the curing agent component or split between both components of the system.

The choice of binder is not particularly critical, and the binder can be selected from all type of binders known in the art including, for example, styrene-acrylic, all acrylic, and vinyl acrylic polymeric binders. In one embodiment of the invention, the binder is a binder that is suitable for use for interior wall paint.

The average particle diameter of the emulsion polymer particles is not particularly critical, and advantageously is from 40 nm to 1000 nm, preferably from 40 nm to 300 nm. Particle diameters herein are those measured by dynamic light scattering on a Brookhaven BI-90 Plus particle size analyzer.

The invention includes an aqueous coating composition comprising: (a) a polymeric binder; (b) optionally, a pigment; (c) water; and (d) a coalescent composition as described hereinabove. The coating composition can be employed in uses such as, for example, wall paints, floor coatings, ceiling paints, and window frame coatings.

The aqueous coating composition of the invention can be prepared by techniques which are well known in the coatings art. First, pigment(s), if any, are well dispersed in an aqueous medium under high shear, such as is afforded by a COWLES™ mixer, or predispersed colorant(s), or mixtures thereof are used. Then the emulsion polymer is added under low shear stirring along with the coalescent composition and other coatings adjuvants as desired. The aqueous coating composition may include, in addition to the aqueous polymeric dispersion and optional pigment(s), conventional coatings adjuvants such as, for example, extenders, emulsifiers, coalescing agents other than the coalescent composition of the present invention, plasticizers, antifreezes, curing agents, buffers, neutralizers, thickeners, rheology modifiers, humectants, wetting agents, biocides, plasticizers, antifoaming agents, UV absorbers, fluorescent brighteners, light and/or heat stabilizers, biocides, chelating agents, dispersants, colorants, waxes, and water-repellants.

The pigment can be selected from the wide range of materials known to those skilled in the art of coatings, including, for example, organic and inorganic colored pigments. Examples of suitable pigments and extenders include titanium dioxide such as anatase and rutile titanium dioxides; zinc oxide; antimony oxide; iron oxide; magnesium silicate; calcium carbonate; aluminosilcates; silica; various clays such as kaolin and delaminated clay; and lead oxide. It is also contemplated that the aqueous coating composition may also contain opaque polymer particles, such as, for example, ROPAQUE™ Opaque Polymers (available from The Dow Chemical Company). Also contemplated are encapsulated or partially encapsulated opacifying pigment particles; and polymers or polymer emulsions adsorbing or bonding to the surface of pigments such as titanium dioxide such as, for example, EVOQUE™ polymers (available from The Dow Chemical Company); and hollow pigments, including pigments having one or more voids.

Titanium dioxide is the main pigment used to achieve hiding in architectural paints. This pigment is expensive and in short supply. One way to achieve hiding while decreasing the amount of $TiO_2$ is to include multistage emulsion polymers, commonly known as "opaque polymers," that add opacity to the paint film. These polymers are water-filled emulsion polymer particles with a high Tg, such as particles polymerized using styrene as the predominant monomer. These particles fill with air during film formation and scatter light, thereby creating opacity.

The amounts of pigment and extender in the aqueous coating composition vary from a pigment volume concentration (PVC) of 0 to 85 and thereby encompass coatings otherwise described in the art, for example, as clear coatings, stains, flat coatings, satin coatings, semi-gloss coatings, gloss coatings, primers, textured coatings, and the like. The aqueous coating composition herein expressly includes architectural, maintenance, and industrial coatings, caulks, sealants, and adhesives. The pigment volume concentration is calculated by the following formula:

PVC (%) = (volume of pigment(s), + volume extender(s) x 100) / (total dry volume of paint).

The solids content of the aqueous coating composition may be from 10% to 70% by volume. The viscosity of the aqueous coating composition may be from 50 centipoises to 50,000 centipoises, as measured using a Brookfield viscometer; viscosities appropriate for different application methods vary considerably, as is known to those skilled in the art.

In the method for forming a coating of the invention, the aqueous coating composition is typically applied to a substrate such as, for example, wood, metal, plastic, marine and civil engineering substrates, previously painted or primed surfaces, weathered surfaces, and cementitious substrates such as, for example, concrete, stucco, and mortar. The aqueous coating composition may be applied to a substrate using conventional coating application methods such as, for example, brush, roller, caulking applicator, roll coating, gravure roll, curtain coater and spraying methods such as, for example, air-atomized spray, air-assisted spray, airless spray, high volume low pressure spray, and air-assisted airless spray.

Drying of the aqueous coating composition to provide a coating may be allowed to proceed under ambient conditions such as, for example, at 5°C to 35°C or the coating may be dried at elevated temperatures such as, for example, from greater than 35°C to 150°C.

SPECIFIC EMBODIMENTS OF THE INVENTION

The following examples are given to illustrate the invention and should not be construed as limiting its scope. All parts and percentages are by weight unless otherwise indicated.

Example 1 - Preparation of COALESCENT A

A coalescent composition comprising tetrapropylene glycol monobutyl ether is produced by refining crude polypropylene glycol monobutyl ether containing oligomers (n is at least 3) of propylene glycol monobutyl ether in a wiped film evaporator under a pressure of about 10 mbar. The residence time in the evaporator is short in order to minimize product degradation.

The feedstock to be distilled enters the evaporator and is immediately distributed. This results in the formation of a thin film on the wall of the evaporator. Volatile materials exhibiting atmospheric equivalent boiling points as high as 400°C are evaporated, condensed and collected. Non-evaporating material is collected as a residue at the base of the unit. The evaporated material is a coalescent composition comprising tetrapropylene glycol monobutyl ether, and is designated COALESCENT A.

The properties of COALESCENT A are compared to a widely used commercial coalescent, UCAR ™ FILMER IBT (available from The Dow Chemical Company), and the results are shown in Table 1. In the following experiments, UCAR™ Filmer IBT is the control coalescent.

Table 1 -Coalescing Agent Physical Properties

| **Coalescing Agent** | UCAR ™ FILMER IBT/TMB | COALESCENT A |
|---|---|---|
| Boiling Point (°C) | 255 | 300 |
| Vapor pressure@ 20°C, (kPa) | 0.0013 | <0.001 |
| Evaporation rate/ Butyl Acetate =1 | <0.01 | <0.001 |
| VOC, determined as emission between C6 and C16 per GC analysis* | Yes | No |
| * UCAR ™ FILMER IBT, 2, 2, 4 trimethyl 1,3 pentanediol monoisobutyrate (TMB),elutes between n-hexane and n-hexadecane according to ISO-16000-6. | | |

Binder Properties

As the focus of the coalescent evaluation is on use in paints for interior walls, floors, ceilings and window frames, two appropriate binders are chosen:

UCAR ™ Latex DL-420G brand styrene-acrylic binder, available from The Dow Chemical Company.

PRIMAL™ AC-337 ER brand pure acrylic binder, available from The Dow Chemical Company.

Styrene-acrylates represent the bigger volume of the binders sold for matte and satin paints, while pure acrylics are used for higher quality paints.

The main characteristics of the binders are summarized in Table 2.

Table 2: Physical Characteristics of binders

| Binder | UCAR™ DL 420G | PRIMAL™ AC-337 ER |
|---|---|---|
| Description | Styrene-Acrylate | Pure Acrylic |
| MFFT * (°C) | 16-20 | 12-16 |
| Solids content (%) | 48-50 | 45-46 |
| Brookfield viscosity @25 °C | RV #2 50 rpm | LV #3 60 rpm |
| Particle Size (nm) | 130-140 | 115-125 |
| *Minimum Film Forming Temperature | | |

<u>Example 2</u> - Coalescent MFFT reduction efficacy

Latex - coalescent blends are prepared using coalescent concentrations from zero to 15 wt% based on dry solids. MFFT is measured on a MFFT bar "60 Minimum Film Forming Temperature Rhopoint Instrument" using a temperature range from zero to 18°C. The efficiency in minimum film forming temperature reduction is then evaluated.

An optimal coalescent concentration has been defined for each binder based on dry solid, according to the method of the preceding paragraph:

- 10 % for UCAR™ Latex DL 420G (49% solids)

- 8% for PRIMAL™ AC- 337 ER (45.5% solids)

When comparing the MFFT reduction efficiency at fixed concentration with the control UCAR™ Filmer IBT by measuring MFFT delta between binder alone and binder-coalescent at defined concentration, one can see that COALESCENT A exhibits properties similar to UCAR™ Filmer IBT.

Table 3 : Delta MFFT at fixed coalescent concentration

| Latex Type | Delta MFFT DL 420G 0-10% in °C | Delta MFFT AC-337 ER 0-8% in °C |
|---|---|---|
| UCAR™ Filmer IBT | 10.7 | 8.7 |
| COALESCENT A | 11 | 10.3 |

<u>Example 3</u> - Paint Formulation

Two 35 wt % PVC formulations are produced as described in Table 4:

Table 4: Paint Formulation

| **Paint** | UCAR™ Latex DL 420G | | | | PRIMAL™ AC-337 ER | | | |
|---|---|---|---|---|---|---|---|---|
| **Material Name** | **Kg** | **Liters** | **Level** | | **Kg** | **Liters** | **Level** | |
| **Grind** | | | | | | | | |
| Water | 189.70 | 189.70 | | | 189.70 | 189.70 | | |
| Ammonia (28%) | 1.30 | 1.44 | | | 1.30 | 1.44 | | |
| Orotan 731 A ER | 10.21 | 9.25 | 1% | % Disp | 10.21 | 9.25 | 1% | % Disp |
| BYK-024 | 1.57 | 1.55 | | | 1.57 | 1.55 | | |
| Cellosize QP-4400H | 6.17 | 4.75 | | | 6.17 | 4.75 | | |
| Ti-Pure R-706 | 171.70 | 42.93 | 15.09% | PVC | 171.70 | 42.93 | 15.52% | PVC |

(continued)

| Paint | UCAR™ Latex DL 420G | | | | PRIMAL™ AC-337 ER | | | |
|---|---|---|---|---|---|---|---|---|
| **Material Name** | **Kg** | **Liters** | **Level** | | **Kg** | **Liters** | **Level** | |
| Satintone 5HB | 22.94 | 8.72 | 3.07% | PVC | 22.94 | 8.72 | 3.15% | PVC |
| Durcal 2 | 60.53 | 21.99 | 7.73% | PVC | 60.53 | 21.99 | 7.95% | PVC |
| *Grind Sub-total* | 464.12 | 280.33 | 25.89% | PVC | 464.12 | 280.33 | 26.63% | PVC |
| **LetDown** | | | | | | | | |
| UCAR Latex- | | | | | | | | |
| 420G | 407.51 | 393.02 | | | 0.00 | 416.72 | | |
| PRIMAL AC-337 | 0.00 | | | | 438.85 | | | |
| UCAR™ Filmer | | | | | | | | |
| IBT/ Coalescing | | | | % | | | | % |
| Agent ROPAQUE Ultra | 21.52 | 22.65 | **10%** | Coal | 17.21 | 18.12 | **8%** | Coal |
| E ACRYSOL RM- | 51.65 | 50.39 | 9.00% | PVC | 51.65 | 50.39 | 9.26% | PVC |
| 2020 | 8.60 | 8.25 | | | 8.60 | 8.25 | | |
| ROCIMA 564 | 1.50 | 1.46 | | | 1.50 | 1.46 | | |
| ROCIMA 350 | 7.50 | 6.82 | | | 7.50 | 6.82 | | |
| Water | 37.60 | 37.60 | | | 10.57 | 10.57 | | |
| Totals | 1000.00 | 800.52 | | | 1000.00 | 792.65 | | |
| **Property** | **Value** | (without additives) | | | Value | (without additives) | | |
| Total PVC | 34.89 | % | | | 35.89 | % | | |
| Volume Solids | 35.53 | % | | | 34.89 | % | | |
| Weight Solids | 47.03 | % | | | 47.03 | % | | |
| Density | 1.2492 | kg/l | | | 1.2616 | kg/l | | |
| Dry Density | 1.6446 | kg/l | | | 1.6901 | kg/l | | |
| Total Dispersant | 1.00 | % | | | 1.00 | % | | |
| Total Coalescent | 10.00 | % | | | 8.00 | % | | |

The grind is composed of titanium dioxide, calcium carbonate (2 μm particle diameter) and an ultra fine particle size calcinated aluminum silicate; a cellulosic thickener is used along with a polyacrylate dispersant. The letdown is composed of the binder, and a nonionic urethane rheology modifier to achieve an ICI viscosity target of 1. ROPAQUE™ Ultra E is used as opaque polymer. Finally, a blend of two biocides to provide in can preservation and film protection are chosen.

The coalescent level is 10 wt % on dry binder for UCAR™ Latex DL-420G and 8 wt % on dry binder for PRIMAL™ AC-337ER. "Dry" in this context means that there is no liquid present.

All latex blends films and paint films are dried in a Controlled Temperature Room (CTR) at 25°C.

Example 4 - Paints based on UCAR™ Latex DL 420G

Hardness Evolution for paints based on UCAR™ Latex DL 420G

100μm wet thickness films of paints based on UCAR™ Latex DL 420G are applied on a glass plate, then the plates are stored in a controlled temperature room (CTR) and their hardness development is measured with a Koenig pendulum.

Table 5: Hardness of 10 wt % paints based on UCAR ™ DL 420G versus time

| **Time (hours)** | **24** | **48** | **72** | **144** | **168** | **192** | **216** | **240** | **408** | **888** | **1344** | **1488** |
|---|---|---|---|---|---|---|---|---|---|---|---|---|
| **UCAR ™ Filmer IBT** | 22.4 | 28 | 33.6 | 39.2 | 42 | 44.3 | 46.7 | 49 | 56 | 73.7 | 77.9 | 70.9 |

(continued)

| Time (hours) | 24 | 48 | 72 | 144 | 168 | 192 | 216 | 240 | 408 | 888 | 1344 | 1488 |
|---|---|---|---|---|---|---|---|---|---|---|---|---|
| **Coalescent A** | 12.6 | 12.6 | 12.6 | 12.6 | 13.5 | 12.6 | 12.6 | 14 | 14 | 19.6 | 21 | 20.1 |

The data in Table 5 show the results for hardness of 10 wt % paints made with UCAR ™ DL 420G versus time, and indicate that paints made with COALESCENT A give lower hardness values, and that COALESCENT A develops hardness slower compared to paints prepared with UCAR™ Filmer IBT.

Rheology and Paint Stability

The rheology profile of the paints of Table 4 is measured. The ICI viscosity target is 1, and values between 0.8 and 1.2 are observed.

Table 6 : ICI Viscosity

| Grade | UCAR™ Filmer IBT | COALESCENT A |
|---|---|---|
| ICI Viscosity | 1.1 | 0.9 |

KU Stormer viscosity is also measured, at fairly similar targeted ICI value, a significant decrease in KU is observed for COALESCENT A.

Table 7: KU Stormer viscosity

| Grade | UCAR™ Filmer IBT | COALESCENT A |
|---|---|---|
| KU Stormer Viscosity | 127 | 121 |

The heat age stability of the paints is checked after 10 days of paints ageing at 60°C. The Brookfield viscosity is then measured. The stability ratio is defined as (viscosity at day 10/initial viscosity). Values between 1 and 1.2 are found at both 30 and 60 rpm. The paints are rather stable, after heat age showing very small differences in viscosity, both at 30 and 60 rpm, respectively.

Table 8: Stability ratio, Brookfield viscosity at 30 and 60 rpm

| Grade | UCAR™ Filmer IBT | COALESCENT A |
|---|---|---|
| Brookfield 30 rpm | 1.19 | 1.05 |
| Brookfield 60 rpm | 1.15 | 1.02 |

Opacity

The hiding performance of the paints based on UCAR ™ Latex DL-420G is checked. Paints are applied on Leneta charts at 100 μm wet film thickness and dried at constant temperature for about 4 days (25°C). The contrast ratio for the dried paint films is measured, using the paint based on UCAR™ Filmer IBT as a reference.

Table 9: Hiding performance of paints based on UCAR ™ DL 420G using different coalescing agents

| Grade | UCAR™ Filmer IBT | COALESCENT A |
|---|---|---|
| Opacity | 94.08 | 94.13 |

The opacity of the COALESCENT A paint is essentially identical to that of the control paint.

Gloss measurement

The gloss of paints is determined on glass panels, after applying a 100μm wet thickness film and drying in the CTR for about 4 days. Gloss is measured at three angles, 20, 60 and 85 degrees, with 60 degree gloss accounting for

a semi-gloss and satin paint, and 85 degree gloss for high gloss sheen.

Table 10: Gloss of DL 420G Paints formulated with the different coalescents

| Gloss % | UCAR™ Filmer IBT | COALESCENT A |
|---|---|---|
| 20° | 2.91 | 2.7 |
| 60° | 13.9 | 19.4 |
| 85° | 42.2 | 53.9 |

COALESCENT A paint exhibits higher 60 and 85 degrees gloss values than the control.

Colored Paints

For paints tinting, 2.52 g of Colortrend Plus 802-907 B lamp black colorant is used per 200 ml of paint. After tinting paste addition, paints are allowed to equilibrate for about 24 hours. The viscosity profile is then checked, showing not much difference; color acceptance is perfect on all paints and no rub out issues are noticed. There is good pigment dispersion for all coalescing agents.

Contact angle measurements

Contact angles are measured on dry films of DL 420G paints using the coalescents studied, after applying 100 μm wet paints on glass panels and drying them for about one week in the CTR. Pictures are taken after water drops are placed at different places on the substrate. Measurements are taken from 3 different places for each paint.

COALESCENT A paint has a higher contact angle than UCAR™ Filmer IBT paint.

Table 11: contact angle measurements

| Grade | UCAR™ Filmer IBT | COALESCENT A |
|---|---|---|
| Contact Angle (°) | 65.41 | 68.76 |

Table 12: Summary of the comparative evaluation of low VOC coalescent versus UCAR™ Filmer IBT in DL-420G paints

| Coalescent Type | COALESCENT A |
|---|---|
| VOC as per ISO 16000 | + |
| MFFT reduction efficiency | = |
| Paint hardness | - |
| Gloss | + |
| Hiding Performance | = |
| Contact Angle | + |

COALESCENT A paint displays excellent gloss and hiding performance as shown in Table 12.

Example 5 - Paints and binder-coalescent blends based on Primal™ AC-337 ER The same evaluation path is repeated as in Example 4 except that PRIMAL™ AC 337 ER binder is used as the binder.

Hardness Evolution for paints based on Primal™ AC-337 ER

UCAR™ Filmer IBT develops hardness faster than COALESCENT A.

Table 13: Hardness development of Paint Films based on Primal ™ AC-337-ER

| Time (hours) | 24 | 48 | 120 | 144 | 168 | 192 | 216 | 384 | 864 | 1320 | 1536 |
|---|---|---|---|---|---|---|---|---|---|---|---|
| UCAR ™ Filmer IBT | 33.1 | 39.2 | 45.7 | 47.6 | 46.2 | 47.6 | 53.2 | 54.6 | 70.9 | 73.7 | 72.8 |
| COALESCENT A | 18.2 | 21 | 22.9 | 23.8 | 22.9 | 22.9 | 27.5 | 26.6 | 39.2 | 40.6 | 37.8 |

Rheology and Paint Stability

The rheology profile of the PRIMAL paints of Table 4 is measured. The ICI viscosity target is 1, Both ICI values are above the target.

Higher values for KU Stormer viscosity are observed as compared to the values found for the paints based on UCAR™ Latex DL-420G.

The higher viscosities observed are probably linked to the higher reactivity of PRIMAL™ AC-337 ER binder with the associative thickener RM 2020 due to the smaller average particle size: 115-125 nm.

Table 14: ICI Viscosity

| Grade | UCAR™ Filmer IBT | COALESCENT A |
|---|---|---|
| ICI Viscosity | 1.19 | 1.24 |

Table 15: KU Stormer viscosity

| Grade | UCAR™ Filmer IBT | COALESCENT A |
|---|---|---|
| KU Stormer Viscosity | 141 | 140 |

Heat age stability of paints is checked after 10 days of paints ageing at 60°C. Brookfield viscosity is then measured. Heat age stability is good for all paints; small differences in viscosity are shown Fig. 16.

Table 16: Stability ratio, Brookfield viscosity at 60 rpm

| Grade | UCAR™ Filmer IBT | COALESCENT A |
|---|---|---|
| Brookfield 60 rpm | 1.03 | 0.99 |

Opacity

Hiding performance of the different paints is evaluated. Paints are applied at 100 μm thickness, dried in the CTR for about 4 days and the contrast ratio is then measured taking UCAR™ Filmer IBT as reference paint.

Table 17: Hiding performance of paints based on Primal ™ AC-337 ER using different coalescing agents

| Grade | UCAR™ Filmer IBT | COALESCENT A |
|---|---|---|
| Opacity | 95.2 | 94.98 |

Higher contrast ratio values are obtained for paints based on Primal™ AC-337 ER as compared to the values for hiding performance for paints based on the styrene acrylic binder UCAR™ Latex DL-420G.

The paint made with UCAR™ Filmer IBT achieves better hiding than the paint prepared using COALESCENT A.

Gloss measurement

The gloss is determined, after applying the paints on glass panels at 100μm wet thickness and drying them at constant room temperature for about 4 days. Gloss is measured at three angles, 20, 60 and 85 degrees. COALESCENT A films display higher gloss values at 20, 60 and 85 degrees compared to the UCAR™ Filmer IBT paint film.

Table 18: Gloss measurements on AC-337 ER paints

| Gloss % | UCAR™ Filmer IBT | COALESCENT A |
|---|---|---|
| 20° | 2 | 2.3 |
| 60° | 12.3 | 14.7 |
| 85° | 39.5 | 40.8 |

Colored Paints

Similar to the paints based on UCAR™ Latex DL-420G, the paints based on PRIMAL™ AC-337 ER show a good color acceptance on all paints no rub out issues are noticed. Good pigment dispersion is observed for all coalescing agents. After paint tinting, the paints are allowed to equilibrate for about 24 hours and the viscosity profile is then checked, showing not much difference.

Contact angle measurements

Contact angles are measured for dry films of AC-337ER paints after applying 100 μm wet paint films on glass panels and allowing the panels to dry at constant temperature (25°C) for one week. Pictures are taken after water drops are placed at different places on the substrate. Measurements are taken from 3 different places for each paint.

Table 19: contact angle measurements

| Grade | UCAR™ Filmer IBT | COALESCENT A |
|---|---|---|
| Contact Angle (deg C) | 77.84 | 72.68 |

The UCAR™ Filmer IBT film has a higher contact angle than the COALESCENT A film.

The pure acrylic PRIMAL binder exhibits an upgrade in performance, all measured values are higher than with DL-420G paints. Paint prepared with COALESCENT A displays excellent gloss and hiding.

Table 20: Summary of Comparative evaluation versus UCAR™ Filmer IBT for paints based on PRIMAL ™ AC-337 ER

| Coalescent Type | COALESCENT A |
|---|---|
| VOC as per ISO 16000 | + |
| Efficacy | + |
| Paint hardness | - |
| Gloss | + |
| Hiding Performance | - |
| Contact Angle | - |

Conclusions

This study made on a 35 % PVC paint shows that COALESCENT A can allow paint formulators to formulate good quality paints having an A+ rating according to French Law Decree 321/2011.

References

Reference 1: ISO Tests

ISO 16000-3:2001 - Indoor Air -- Part 3: Determination of formaldehyde and other carbonyl compounds -- Active sampling method.

ISO 16000-6:2004 - Indoor Air -- Part 6: Determination of volatile organic compounds in indoor and test chamber air by active sampling on Tenax TA sorbent, thermal desorption and gas chromatography using MS/FID.

EN ISO 16000-9:2006 - Indoor Air -- Part 9: Determination of the emission of volatile organic compounds from building products and furnishing -- Emission test chamber method.

EN ISO 16000-10:2006 - Indoor Air -- Part 10: Determination of the emission of volatile organic compounds from building products and furnishing -- Emission test cell method.

EN ISO 16000-11:2006 - Indoor Air -- Part 11: Determination of the emission of volatile organic compounds from building products and furnishing -- Sampling, storage of samples and preparation of test specimens.

## Claims

1. A coalescent composition comprising at least one glycol ether of the formula $R1(O-CH_2-CH(CH_3))_n-OH$, wherein R1 is an alkyl group of at least 3 carbon atoms, and n has an average value of from 4 to 6, wherein n = 4 for at least 60% by weight of the glycol ethers, and no more than 15% by weight of the glycol ethers have an n value of 3 or less.

2. The composition of any of the preceding claims wherein n = 4 for at least 70% by weight of the glycol ethers.

3. The composition of any of the preceding claims wherein no more than 10% by weight of the glycol ethers have an n value of 3 or less.

4. The composition of any of the preceding claims wherein tetrapropylene glycol n-butyl ether is at least 70% by weight of the glycol ethers.

5. The composition of any of the preceding claims wherein R1 is butyl for at least one glycol ether.

6. The composition of any of the preceding claims wherein R1 is n-butyl for at least one glycol ether.

7. An aqueous coating composition comprising:

   (a) a polymeric binder;
   (b) optionally, a pigment;
   (c) water; and
   (d) a coalescent composition of any of the preceding claims.

8. The composition of Claim 7 wherein a coating prepared using the composition passes the requirements of French law decree 2011/321.

9. The composition of Claim 7 wherein the binder comprises at least one of a pure acrylic binder and a styrene-acrylic binder.

10. The composition of Claim 7 comprising at least one of (a) and opaque polymer particle, and (b) a polymer or polymers emulsion having a pigment bonded or adsorbed onto the surface of the polymer.

## Patentansprüche

1. Eine Koaleszenzzusammensetzung, die mindestens einen Glykolether mit der Formel $R1(O-CH_2-CH(CH_3))_n-OH$ beinhaltet, wobei R1 eine Alkylgruppe mit mindestens 3 Kohlenstoffatomen ist und n einen durchschnittlichen Wert von 4 bis 6 aufweist, wobei für mindestens 60 Gew.-% der Glykolether n = 4 ist, und wobei nicht mehr als 15 Gew.-% der Glykolether einen n-Wert von 3 oder weniger aufweisen.

2. Zusammensetzung gemäß einem der vorhergehenden Ansprüche, wobei für mindestens 70 Gew.-% der Glykolether n = 4 ist.

3. Zusammensetzung gemäß einem der vorhergehenden Ansprüche, wobei nicht mehr als 10 Gew.-% der Glykolether einen n-Wert von 3 oder weniger aufweisen.

4. Zusammensetzung gemäß einem der vorhergehenden Ansprüche, wobei Tetrapropylenglykol-n-butylether mindestens 70 Gew.-% der Glykolether ausmacht.

5. Zusammensetzung gemäß einem der vorhergehenden Ansprüche, wobei R1 für mindestens einen Glykolether Butyl ist.

6. Zusammensetzung gemäß einem der vorhergehenden Ansprüche, wobei R1 für mindestens einen Glykolether n-Butyl ist.

7. Eine wässrige Beschichtungszusammensetzung, die Folgendes beinhaltet:

(a) ein polymeres Bindemittel;
(b) optional ein Pigment;
(c) Wasser; und
(d) eine Koaleszenzzusammensetzung gemäß einem der vorhergehenden Ansprüche.

8. Zusammensetzung gemäß Anspruch 7, wobei eine Beschichtung, die unter Verwendung der Zusammensetzung hergestellt worden ist, den Anforderungen des Dekrets 2011/321 des französischen Rechts entspricht.

9. Zusammensetzung gemäß Anspruch 7, wobei das Bindemittel mindestens eines von einem reinen Acrylbindemittel und einem Styrol-Acryl-Bindemittel beinhaltet.

10. Zusammensetzung gemäß Anspruch 7, die mindestens eines von (a) einem opaken Polymerteilchen und (b) einer Emulsion aus einem Polymer oder Polymeren mit einem Pigment, das an die Oberfläche des Polymers gebunden oder auf diese absorbiert ist, beinhaltet.

**Revendications**

1. Une composition coalescente comprenant au moins un éther de glycol de la formule $R1(O-CH_2-CH(CH_3))_n-OH$, dans laquelle R1 est un groupe alkyle d'au moins 3 atomes de carbone, et n a une valeur moyenne comprise entre 4 et 6, dans laquelle n = 4 pour au moins 60 % en poids des éthers de glycol, et pas plus de 15 % en poids des éthers de glycol ont une valeur n de 3 ou moins.

2. La composition de n'importe lesquelles des revendications précédentes dans laquelle n = 4 pour au moins 70 % en poids des éthers de glycol.

3. La composition de n'importe lesquelles des revendications précédentes dans laquelle pas plus de 10 % en poids des éthers de glycol ont une valeur n de 3 ou moins.

4. La composition de n'importe lesquelles des revendications précédentes dans laquelle l'éther n-butylique de tétrapropylène glycol représente au moins 70 % en poids des éthers de glycol.

5. La composition de n'importe lesquelles des revendications précédentes dans laquelle R1 est un butyle pour au moins un éther de glycol.

6. La composition de n'importe lesquelles des revendications précédentes dans laquelle R1 est un n-butyle pour au moins un éther de glycol.

7. Une composition de revêtement aqueuse comprenant :

(a) un liant polymère ;
(b) facultativement, un pigment ;
(c) de l'eau ; et
(d) une composition coalescente de n'importe lesquelles des revendications précédentes.

**8.** La composition de la revendication 7 dans laquelle un revêtement préparé à l'aide de la composition satisfait aux exigences du Décret français n° 2011/321.

**9.** La composition de la revendication 7 dans laquelle le liant comprend au moins un liant parmi un liant acrylique pur et un liant styrène-acrylique.

**10.** La composition de la revendication 7 comprenant au moins soit (a) une particule de polymère opaque, soit (b) une émulsion de polymère ou de polymères ayant un pigment lié ou adsorbé sur la surface du polymère.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 61640205 A